# EUROPÄISCHE PATENTSCHRIFT

(11) **EP 1 934 486 B1**
(45) Veröffentlichungstag und Bekanntmachung des Hinweises auf die Patenterteilung: **09.03.2011**
(21) Anmeldenummer: 06806749.5
(22) Anmeldetag: 05.09.2006
(51) Int. Cl.: F04D 29/58, F04D 27/02, F04D 25/16, F01P 7/04

(54) **KÜHLERLÜFTERMODUL FÜR EIN KRAFTFAHRZEUG**
COOLING FAN MODULE FOR A MOTOR VEHICLE
MODULE VENTILATEUR DE RADIATEUR POUR UN VEHICULE A MOTEUR

(30) Priorität: 12.10.2005 DE 102005048886
(43) Veröffentlichungstag der Anmeldung: 25.06.2008
(73) Patentinhaber: Brose Fahrzeugteile GmbH & Co. KG, Würzburg, 97076 Würzburg (DE)
(72) Erfinder: DE FILIPPIS, Pietro, I-20124 Milano (IT); REDELBERGER, Harald, 97273 Kürnach (DE)
(74) Vertreter: Reinhard - Skuhra - Weise & Partner GbR
(86) Internationale Anmeldenummer: PCT/EP2006/066001
(87) Internationale Veröffentlichungsnummer: WO 2007/042351

(56) Entgegenhaltungen:
- EP-A1- 0 761 982
- EP-A1- 1 495 886
- JP-A- 2006 007 921
- US-A1- 2003 140 643

## Beschreibung

Die Erfindung betrifft ein Kühlerlüftermodul für ein Kraftfahrzeug und ein Verfahren zum Betrieb des Moduls. Insbesondere betrifft die Erfindung ein Kühlerlüftermodul mit einem ersten Lüftermotor zum Antrieb eines ersten Kühlerlüfters und mit einem zweiten Lüftermotor zum Antrieb eines zweiten Kühlerlüfters.

In Kühlerlüftermodulen für Kraftfahrzeuge werden häufig zwei oder mehr Kühlerlüfter eingesetzt. Bei der Verwendung zweier Kühlerlüfter spricht man auch von einem Doppelmodul. Der Einsatz mehrerer Kühlerlüfter erfolgt aus mehreren Gründen:
Zum einen ist oft der zur Verfügung stehende Bauraum im Fahrzeug begrenzt. Zum anderen ist auch die benötigte Luftleistung ein Argument für die Verwendung mehrerer Kühlerlüfter.
Da bei größeren Leitungen die verwendeten Lüftermotoren länger werden, kann im Hinblick auf die benötigte Baulänge eine Aufteilung auf zwei kleinere, kürzere Lüftermotoren sinnvoll sein. Werden hohe Kühlleistungen benötigt, ist eine Aufteilung auf zwei (oder mehrere) Kühlerlüfter oft sinnvoll und/oder notwendig, da aufgrund einer unzureichenden Wärmeabfuhr ein einzelner Lüftermotor die benötigte Leistung.nicht zur Verfügung stellen kann.

Darüber hinaus kann es aufgrund des Designs eines Fahrzeugs oder anderer Gründe erforderlich sein, dass Wärmetauscher zum Einsatz kommen, die eine mehr rechteckige Form aufweisen. Im Gegensatz zu einem quadratischen Aufbau ist bei einem mehr rechteckigen Aufbau eine Doppellüfterkonfiguration sinnvoll, da damit eine größere Abdeckung des Wärmetauschers erreicht werden kann und die Anströmung aus den Ecken des Wärmetauschers verbessert wird.

Schließlich kommen zwei oder mehrere Kühlerlüfter dann zum Einsatz, wenn - beispielsweise aus Gründen der Verfügbarkeit - eine Redundanz erreicht werden soll.

Bisher wiesen solche Doppelmodule zwei bürstenbehaftete Gleichstrommotoren auf, die entweder in Reihe oder parallel betrieben wurden, um bestimmte Drehzahl- und damit Luftleistungsstufen zu erhalten. In neueren Anwendungen werden die bürstenbehafteten Gleichstrommotoren mit entweder internen, externen oder in einem der beiden Motoren integrierten PWM-Stelleinheiten betrieben.

Erhöhte Anforderungen bezüglich Baulänge, Leistung und Kosten erfordern auch für Doppelmodul neue Lösungsansätze.

In der EP 1495 886 A1, die alle Merkmale des Oberbegriffs des Anspruchs 1 offenbart, ist eine elektrische Lüftereinrichtung für ein Fahrzeug beschrieben, mit einem ersten elektrischen Lüfter, der einen bürstenlosen Motor verwendet, mit einem zweiten elektrischen Lüfter, der einen bürstenbehafteten Motor verwendet. Die Lüftereinrichtung weist ferner eine elektrische Steuerungseinrichtung auf, welche nur den ersten Lüfter aktiviert, wenn sie festestellt, dass die Kühlwassertemperatur geringer als eine Temperatur T2 ist, und aktiviert den ersten und den zweiten Lüfter, wenn sie feststellt, dass die Kühlwassertemperatur größer oder gleich der Temperatur T2 ist.

In der US 2003/0140643 A1 ist eine Antriebsvorrichtung für Lüftermotoren für Fahrzeuge beschrieben, welche einen ersten bis vierten Halbleiterschalter zum Betrieb eines ersten und zweiten Lüftermotors aufweist.

Eine Aufgabe der vorliegenden Erfindung ist es, eine technische Lösung für eine kostengünstige und kompakte Kühlerlüftung bereitzustellen.

Diese Aufgabe wird durch ein Kühlerlüftermodul für ein Kraftfahrzeug nach Anspruch 1 bzw. durch ein Verfahren nach Anspruch 3 gelöst.

Das erfindungsgemäße Kühlerlüftermodul weist einen bürstenlosen ersten Lüftermotor zum Antrieb eines ersten Kühlerlüfters und einen zweiten Lüftermotor zum Antrieb eines zweiten Kühlerlüfters auf, wobei dem ersten Lüftermotor eine Steuereinheit zugeordnet ist, die zugleich mit dem ersten Lüftermotor auch den zweiten Lüftermotor betreibt.

Mit einem solchen Kühlerlüftermodul lässt sich ein Verfahren verwirklichen, wobei der erste Lüftermotor über die Steuereinheit drehzahlgeregelt angesteuert wird und sich die Drehzahl des zweiten Lüftermotors in Abhängigkeit von der Drehzahl des ersten Lüftermotors einstellt.

Eine Grundidee der Erfindung ist eine hybride Anordnung eines bürstenlosen Lüftermotors mit einem zweiten Lüftermotor vorzusehen. Dabei wird nur eine Elektronikeinheit für den bürstenlosen Lüftermotor eingesetzt und für den zweiten Lüftermotor mitgenutzt. Mit anderen Worten erfolgt der Betrieb des zweiten Lüftermotors (der keine eigene Steuereinheit aufweist) automatisch und zwangsläufig, sobald der erste Lüftermotor betrieben wird. Dabei kommt lediglich eine einzige Steuereinheit zum Einsatz.

Die erfindungsgemäße Lösung steht damit völlig im Gegensatz zu bereits bekannten Ansätzen, bei denen eine einzige Steuereinheit nur deshalb zum Betreiben zweier Lüftermotoren verwendet werden kann, weil die Steuereinheit zwei separate Ansteuerungen enthält, nämlich für jeden Lüftermotor eine. Derartige bekannte Steuereinheiten bestehen streng genommen aus zwei einzelnen Steuereinheiten, die in ein und demselben Gehäuse untergebracht sind.

Aufgrund der Verwendung eines bürstenlosen Lüftermotors kann eine gegenüber den aus dem Stand der Technik bekannten Lösungen deutlich höhere Zuverlässigkeit und Lebensdauer der Kühlerlüfter erzielt werden.

Durch die Verwendung eines bürstenlosen Lüftermotors ist es darüber hinaus möglich, eine Doppel- oder Mehrfachlüfterkonfiguration mit einer sehr geringen Baulänge zu verwirklichen. Trotz einer beschränkten Baulänge ist es dabei möglich, die Steuereinheit in den bürstenlosen Kühlerlüfter zu integrieren. Dies ist bei bürstenbehafteten Gleichstrommotoren, wie sie im Stand der Technik Verwendung finden, nicht ohne eine Verlängerung der Baulänge möglich.

Insgesamt kann ein höherer Systemwirkungsgrad erzielt werden, da der bürstenlose Lüftermotor in der Regel einen um ca. 10-15% höheren Wirkungsgrad besitzt.

Vorteilhafte Ausgestaltungen der Erfindung sind in den Unteransprüchen angegeben.

Gemäß einer besonders bevorzugten Ausführungsform der Erfindung sind der erste Lüftermotor und der zweite Lüftermotor in Reihe geschaltet, so dass ein "serielles Doppelmodul" entsteht.

Gemäß einer bevorzugten Ausführungsform der Erfindung ist die Steuereinheit an eine Versorgungsleitung und eine Masseleitung angeschlossen und weist eine Anzahl von Anschlusselementen zum Anschluß des ersten Lüftermotors auf. Die Steuereinheit kann dabei zum einen in dem Gehäuse des ersten Lüftermotors angeordnet sein. Sie kann jedoch andererseits auch außerhalb des Gehäuses des ersten Lüftermotors als externe Steuereinheit vorgesehen sein.

Bei dem ersten Lüftermotor handelt es sich vorzugsweise um einen bürstenlosen Motor mit einer beliebigen Anzahl von Phasen, beispielsweise mit drei oder fünf Phasen, der bipolar oder unipolar betrieben wird. Bei dem zweiten Lüftermotor handelt es sich vorzugsweise um einen bürstenbehafteten Gleichstrommotor, der in Reihe mit der Versorgungsleitung der Steuereinheit verbunden ist. Durch die Verwendung eines bürstenbehafteten Gleichstrommotors kann das Kühlerlüftermodul kostengünstiger als vergleichbare Lösungen mit zwei bürstenlosen Lüftermotoren hergestellt werden. Da für den bürstenbehafteten Gleichstrommotor keine separate Steuereinheit vorgesehen werden muss, werden zudem keine der nachfolgenden Bauelemente benötigt: Spannungsregler, Mikrocontroller, Resonatoren o.ä., Leistungsbauelemente wie MOSFETs oder Dioden, Treiberstufen, Interfaceschaltelemente, etc. Dies verringert die Herstellungskosten.

Darüber hinaus hat die Verwendung eines bürstenbehafteten Gleichstrommotors weitere Vorteile: So wirken die Entstörelemente des bürstenbehafteten Gleichstrommotors sowie auch die Induktivität des bürstenbehafteten Gleichstrommotors selbst als Entstörglieder für den bürstenlosen Antrieb. Damit kann der Entstöraufwand (Filter etc.) für den bürstenlosen Antrieb reduziert werden.

Die Drehzahlregelung des ersten Motors erfolgt gemäß einer weiteren Ausführungsform in der Steuereinheit, die als Eingangssignal eine Drehzahl-Sollwert-Information erhält. Besonders vorteilhaft ist es zudem, wenn die Steuereinheit eine von der Stromversorgung der beiden Lüftermotoren unabhängige Stromversorgung aufweist.

Die Erfindung wird nachfolgend anhand eines Ausführungsbeispiels beschrieben, das mit Hilfe von Zeichnungen näher erläutert wird. Hierbei zeigen in vereinfachten Darstellungen:
- FIG 1: eine schematische Blockdarstellung eines seriellen Doppelmoduls und
- FIG 2: eine Schaltskizze eines seriellen Doppelmoduls mit einem bürstenbehafteten zweiten Motor.

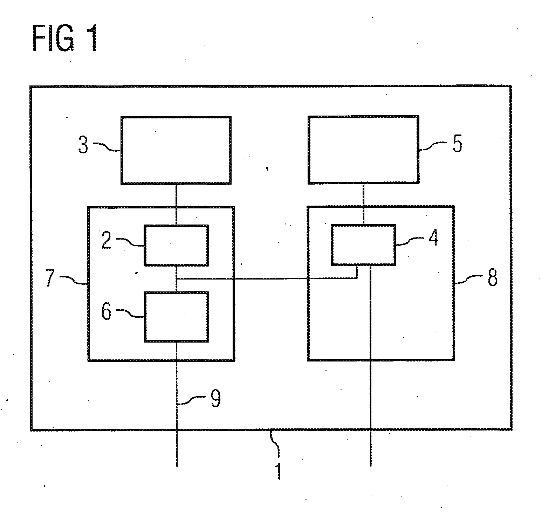

Erfindungsgemäß weist ein Kühlerlüftermodul 1 für ein Kraftfahrzeug einen ersten Lüftermotor 2 zum Antrieb eines ersten Kühlerlüfters 3 und einen zweiten Lüftermotor 4 zum Antrieb eines zweiten Kühlerlüfters 5 auf. FIG 1 zeigt eine solche Doppelkonfiguration in einer stark vereinfachten Abbildung, bei der eine Versorgungsleitung 9 sowie die weiteren Verbindungsleitungen nur schematisch gezeigt sind. Als einzige Steuereinheit dient die integrierte Steuereinheit 6 des ersten Lüftermotors 2 zugleich zum Betrieb des zweiten Lüftermotors 4, der in Reihe mit dem ersten Lüftermotor 2 verschaltet ist. Die integrierte Steuereinheit 6 ist dabei in dem Gehäuse 7 des ersten Lüftermotors 2 angeordnet, während das Gehäuse 8 des zweiten Lüftermotors frei bleibt und entsprechend kleiner ausgeführt werden kann.

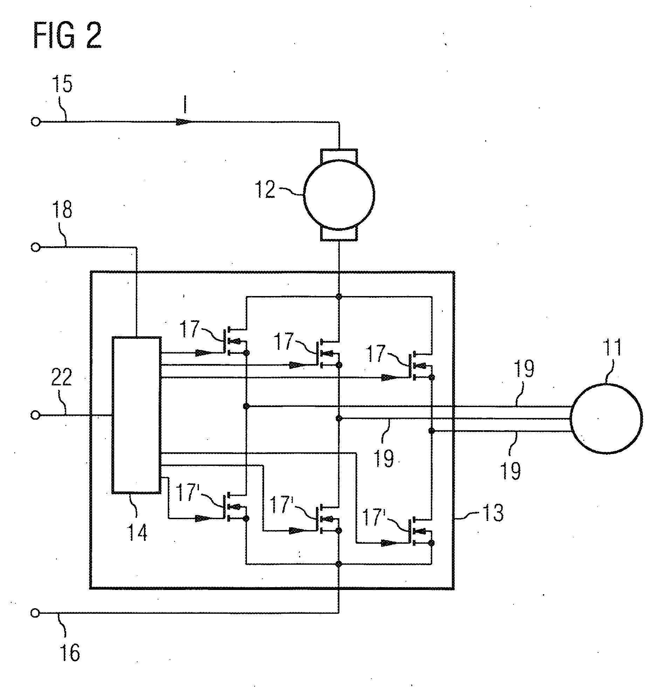

In einem Ausführungsbeispiel (vgl. FIG 2) weist ein Kühlerlüftermodul für ein Kraftfahrzeug einen bürstenlosen Motor 11 als ersten Lüftermotor und einen bürstenbehafteten Gleichstrommotor 12 als zweiten Lüftermotor auf. Die Kühlerlüfter 3, 5 selbst sind aus Gründen der Übersichtlichkeit in FIG 2 nicht abgebildet. Die Lüftermotoren 11, 12 sind in Reihe geschaltet. Der bürstenlose Motor 11 weist eine integrierte Steuereinheit 13 auf, während für den bürstenbehafteten Gleichstrommotor 12 erfindungsgemäß keine separate Steuereinheit benötigt wird. In dem gezeigten Ausführungsbeispiel ist der bürstenlose Motor 11 ein dreiphasiger, bipolar betriebener Motor (Drehstrommotor).

Die Steuereinheit 13 weist eine Steuerelektronik 14 auf, die zur Versorgung der Lüftermotoren 11, 12 mit einer Versorgungsspannung an eine Kfz-übliche Hauptspannungs-Versorgungsleitung 15 ("Klemme 30") des Kraftfahrzeugs und eine entsprechende Masseleitung 16 ("Klemme 31") angeschlossen ist. Die Lüftermotoren 11, 12 sind dabei jeweils für eine Spannung ausgelegt, die deutlich geringer ist als die Versorgungsspannung, z.B für jeweils die halbe Versorgungsspannung. Zur Ansteuerung des bürstenlosen Drehstrommotors 11 mit einem Dreiphasen-Drehstromsystem ist die Steuereinheit 13 in ihrem Leistungsteil mit der Funktionalität eines Umrichters ausgestattet. Hierzu dient eine Anordnung elektronischer Schalttransistoren 17, 17' (Leistungstransistoren, MOSFETs), wie sie zur Ansteuerung des bürstenlosen Drehstrommotors 11 benötigt wird. Da die Steuereinheit 13 des bürstenlosen Drehstrommotors 11 auch für den Betrieb des bürstenbehafteten Gleichstrommotors 12 dient, muss sie für die beiden Motorströme ausgelegt sein, d.h. bei der Ausführung der Steuereinheit 13 muss eine entsprechende Verlustleistung bei der Dimensionierung berücksichtigt werden.

Zur elektrischen Versorgung der Steuerelektronik 14 unabhängig von der Versorgungsspannung über die Leitungen 15, 16 ist eine separate Kfz-übliche Hilfsspannung-Versorgungsleitung 18 ("Klemme 15") vorgesehen. Bei abgeschalteter Versorgungsleitung 18 ist die Ruhestromaufnahme der Steuereinheit 13 nahezu null. Darüber hinaus ist die Steuerelektronik 14 über eine Anschlußleitung 22 mit einem externen Signalgeber (nicht abgebildet) verbunden, der eine Drehzahl-Sollwert-Information bereitstellt.

Zum Anschluß des bürstenlosen Drehstrommotors 11 weist die Steuereinheit 13 drei Phasenanschlüsse 19 auf, die entsprechend an die elektronischen Schalttransistoren 17, 17' angeschlossen sind. Der bürstenbehaftete Gleichstrommotor 12 ist in Reihe mit der Gleichspannungs-Versorgungsleitung angeschlossen. Der Umrichterstrom, also der Summenstrom durch die plusseitigen Schalttransistoren 17, fließt durch den bürstenbehafteten Gleichstrommotor 12 und bildet dessen Strom I. In erster Näherung wirkt der Leistungsteil der Steuereinheit 13 daher als Stromquelle für den bürstenbehafteten Gleichstrommotor 12. Der Leistungsteil (Umrichter) prägt mit anderen Worten einen Strom in die Versorgungsleitung ein und erzeugt damit in dem bürstenbehafteten Gleichstrommotor 12 ein entsprechenden Drehmoment. Über die Lüfterkennlinie ergibt sich damit eine zugehörige konstante Drehzahl des bürstenbehafteten Gleichstrommotors 12. Ein gleich hoher Strom I durchfließt auch als Summenstrom den bürstenlosen Drehstrommotor 11.

Der Anschluss eines bürstenbehafteten Gleichstrommotors 12 an einen bürstenlosen Drehstrommotor 11 zum Erreichen des erfindungsgemäßen Effektes ist auf einfache Art und Weise möglich. Hierzu muss der bürstenbehaftete Gleichstrommotor 12 in die Versorgungsleitung 15 des bürstenlosen Drehstrommotors 11 angeschlossen werden. Zusätzlich wird eine separate Stromversorgung der Steuerelektronik 14 benötigt, wie sie im vorliegenden Beispiel über die Versorgungsleitung 18 ("Klemme 15") erfolgt.

Die Reihenschaltung der beiden Lüftermotoren 11, 12 hat folgende Auswirkungen:
Da die zur Versorgung der Lüftermotoren zur Verfügung stehende Spannung aufgeteilt werden muss, ist es von Vorteil, dass man Lütftermotoren auswählt, die in etwa die gleiche Leistungsaufnahme haben. Wird beispielsweise bei einer Versorgungsspannung von 12V eine Gesamtleistung von 800 W benötigt, so werden vorzugsweise ein bürstenloser 400W-Drehstrommotor und ein bürstenbehafteter 400W-Gleichstrommotor verwendet, wobei jedem Lüftermotor eine Motorspannung von 6V zur Verfügung steht.

Im Falle einer Verpolung der Versorgungsspannung (Versorgungsleitungen 15, 16) ergibt sich eine automatische Strombegrenzung durch den bürstenbehafteten Gleichstrommotor 12. Der bürstenbehaftete Gleichstrommotor 12 läuft dabei an.

Durch die Strombegrenzung in dem bürstenlosen Drehstrommotor 11 mit integrierter Steuereinheit 13 ergibt sich auch eine Strombegrenzung in dem bürstenbehafteten Gleichstrommotor 12, ohne dass zusätzliche Elektronikkomponenten oder andere Maßnahmen erforderlich sind. Wenn die Versorgungsspannung des bürstenlosen Drehstrommotors gemessen wird, kann u.a. ein Stillstand (Blockieren) des bürstenbehafteten Gleichstrommotors erkannt werden, da dann nur noch der Spannungsabfall am Innenwiderstand des Gleichstrommotors entsteht, jedoch keine Gegen-EMK mehr. Daher ist eine signifikante Spannungserhöhung messbar, die auf das Blockieren schließen lässt. Damit läßt sich auf einfache Art und Weise sowohl eine Blockierschutzfunktion als auch eine Kurzschlussschutzfunktion für den bürstenbehafteten Gleichstrommotor 12 erreichen.

Ein weiterer Vorteil der erfindungsgemäßen Anordnung ist es, dass für den bürstenbehafteten Gleichstrommotor 12 keine weiteren Elektronikkomponenten erforderlich sind. Da der bürstenbehaftete Gleichstrommotor 12 keine separate Steuereinheit aufweist, fällt auch keine Verlustleistung durch Elektronik-komponenten an. Dadurch verringert sich auch der Kühlaufwand.

Die erfindungsgemäße Reihenschaltung der beiden Lüftermotoren 11, 12 hat auch Auswirkungen auf das Betriebsverhalten der beiden Kühlerlüfter 3, 5. Der bürstenlose Drehstrommotor 11 wird über die Steuereinheit 13 drehzahlgeregelt betrieben.

Über das Lüftergesetz M = c * n² ist ein eindeutiger Zusammenhang zwischen Drehzahl n und Drehmoment M gegeben (c = Lüfterkonstante). Das Drehmoment M wiederum ist proportional zu dem Motorstrom I. Damit stellt der drehzahlgeregelte bürstenlose Drehstrommotor 11 eine Stromquelle für den bürstenbehafteten Gleichstrommotor 12 dar. Durch das Einprägen des Stromes I in den bürstenbehafteten Gleichstrommotor 12 ergibt sich ein eingeprägtes Drehmoment M aufgrund des eindeutigen Zusammenhangs zwischen Strom I und Drehmoment M bei dem bürstenbehafteten Gleichstrommotor 12. Durch dessen Kühlerlüfter 5 und wiederum dessen Lüftergesetz ergibt sich wiederum eine zugehörige Drehzahl n'. Der dargestellte Zusammenhang gilt ähnlich im gesamten Drehzahlbereich. Der genaue Zusammenhang bleibt der jeweiligen Anwendung und der Auslegung der Lüftermotoren 11, 12 überlassen. Bei Laständerungen des bürstenbehafteten Gleichstrommotors 12 entsteht eine selbst begrenzende Funktion. Wenn die Last reduziert wird (z.B. durch Fahrtwind bei einem bewegten Kraftfahrzeug), wird sich die Drehzahl n durch das eingeprägte Drehmoment M erhöhen. Damit erhöht sich aber auch die Gegen-EMK (elektromotorische Kraft) und dem bürstenlosen Drehstrommotor 11 steht weniger Versorgungsspannung zur Verfügung. Das hat zur Folge, dass die Drehzahlregelung in die Begrenzung läuft. Damit wird aber auch kein konstantes Drehmoment M mehr in den bürstenbehafteten Gleichstrommotor 12 eingeprägt. Im Falle der Erhöhung der Last des bürstenbehafteten Gleichstrommotors 12 ergibt sich eine Drehzahlreduzierung. Hierdurch verringert sich die Gegen-EMK, wodurch für die Umrichter des bürstenlosen Drehstrommotors 11 eine höhere Spannung zur Verfügung steht. Die Umrichter können nachregeln und damit den Strom I konstant halten. Das hat aufgrund der Stromeinprägung zur Folge, dass auch der Strom I durch den bürstenbehafteten Gleichstrommotor 12 konstant ist. Insgesamt wird also durch die erfindungsgemäße Konfiguration sowohl eine Leistungserhöhung als auch eine Überlastung sicher verhindert.

Zusammengefaßt erfolgt für den bürstenbehafteten Gleichstrommotor 12 anstelle einer Drehzahlregelung eine Stromregelung. Diese Stromregelung erfolgt dabei indirekt, da sich der Strom I (der auch durch den bürstenbehafteten Gleichstrommotor 12 fließt) genau so einstellt, wie es der Kühlerlüfter 3 des bürstenlosen Drehstrommotors 11 erfordert.

In einem weiteren (nicht abgebildeten) Ausführungsbeispiel ist die Induktivität des bürstenbehafteten Gleichstrommotors 12 nicht nur als Entstörglied, sondern auch als Speicherelement eines Hochsetzstellers nutzbar. Damit könnte mit einem vergleichsweise geringem Mehraufwand an Elektronikkomponenten ein "Zwischennetz" mit hoher Spannung erzeugt werden, was niedrige Ströme und damit auch niedrigere Verluste zur Folge hätte. Der Vorteil dieser Lösung mit Hochsetzstellerfunktion liegt darin, dass die beiden Lüftermotoren 11, 12 für höhere Spannungen ausgelegt werden können. Dieser Ansatz ist hauptsächlich sinnvoll bei Leistungen größer 1 kW, z.B. bei einem bürstenloser Antrieb mit 1000 W Leistung und einem bürstenbehafteter Antrieb mit 500 W Leistung.

## Patentansprüche

1. Kühlerlüftermodul (1) für ein Kraftfahrzeug, mit einem bürstenlosen ersten Lüftermotor (2; 11) zum Antrieb eines ersten Kühlerlüfters (3) und mit einem bürstenbehafteten zweiten Lüftermotor (4; 12) zum Antrieb eines zweiten Kühlerlüfters (5), wobei dem ersten Lüftermotor (2; 11) eine Steuereinheit (6; 13) zugeordnet ist, die zugleich mit dem ersten Lüftermotor (2; 11) auch den zweiten Lüftermotor (4; 12) betreibt, **dadurch gekennzeichnet, dass** die Steuereinheit (13) eine von der Stromversorgung der Lüftermotoren (2; 11; 4; 12) unabhängige Stromversorgung aufweist.

2. Kühlerlüftermodul (1) nach Anspruch 1,
**dadurch gekennzeichnet,**
**dass** der erste Lüftermotor (2; 11) und der zweite Lüftermotor (4; 12) in Reihe geschaltet sind.

3. Verfahren zum Betrieb eines Kühlerlüftermoduls (1) für ein Kraftfahrzeug, wobei das Kühlerlüftermodul (1) einen bürstenlosen ersten Lüftermotor (2; 11) zum Antrieb eines ersten Kühlerlüfters (3) und einen bürstenbehafteten zweiten Lüftermotor (4; 12) zum Antrieb eines zweiten Kühlerlüfters (5) aufweist, wobei dem ersten Lüftermotor (2; 11) eine Steuereinheit (6; 13) zugeordnet ist, die zugleich mit dem ersten Lüftermotor (2; 11) auch den zweiten Lüftermotor (4; 12) betreibt, und wobei der erste Lüftermotor (2; 11) über die Steuereinheit (13) drehzahlgeregelt angesteuert wird und sich die Drehzahl des zweiten Lüftermotors (4; 12) in Abhängigkeit von der Drehzahl des ersten Lüftermotors (2; 11) einstellt.

## Claims

1. Radiator fan module (1) for a motor vehicle, having a brushless first fan motor (2; 11) for driving a first radiator fan (3) and having a second fan motor (4; 12), with brushes, for driving a second radiator fan (5), with the first fan motor (2; 11) having an associated control unit (6; 13) which, at the same time as the first fan motor (2; 11), also operates the second fan motor (4; 12), **characterized in that** the control unit (13) has a power supply system which is independent of the power supply system of the fan motors (2; 11; 4; 12).

2. Radiator fan module (1) according to Claim 1, **characterized in that** the first fan motor (2; 11) and the second fan motor (4; 12) are connected in series.

3. Method for operating a radiator fan module (1) for a motor vehicle, with the radiator fan module (1) having a brushless first fan motor (2; 11) for driving a first radiator fan (3) and a second fan motor (4; 12), with brushes, for driving a second radiator fan (5), with the first fan motor (2; 11) having an associated control unit (6; 13) which, at the same time as the first fan motor (2; 11), also operates the second fan motor (4; 12), and with the first fan motor (2; 11) being actuated in a rotation speed-controlled manner by means of the control unit (13) and the rotation speed of the second fan motor (4; 12) being set as a function of the rotation speed of the first fan motor (2; 11).

## Revendications

1. Module de ventilateur de radiateur (1) pour un véhicule automobile, comprenant un premier moteur de ventilateur sans balais (2 ; 11) permettant l'entraînement d'un premier ventilateur de radiateur (3) et un deuxième moteur de ventilateur à balais (4 ; 12) permettant l'entraînement d'un deuxième ventilateur de radiateur (5), le premier moteur de ventilateur (2 ; 11) étant associé à une unité de commande (6 ; 13) qui fait également fonctionner le deuxième moteur de ventilateur (4 ; 12) en même temps que le premier moteur de ventilateur (2 ; 11), **caractérisé en ce que** l'unité de commande (13) présente une alimentation indépendante de l'alimentation des moteurs de ventilateur (2 ; 11 ; 4 ; 12) .

2. Module de ventilateur de radiateur (1) selon la revendication 1, **caractérisé en ce que** le premier moteur de ventilateur (2 ; 11) et le deuxième moteur de ventilateur (4 ; 12) sont montés en série.

3. Procédé de fonctionnement d'un module de ventilateur de radiateur (1) pour un véhicule automobile, le module de ventilateur de radiateur (1) comprenant un premier moteur de ventilateur sans balais (2 ; 11) permettant l'entraînement d'un premier ventilateur de radiateur (3) et un deuxième moteur de ventilateur à balais (4 ; 12) permettant l'entraînement d'un deuxième ventilateur de radiateur (5), le premier moteur de ventilateur (2 ; 11) étant associé à une unité de commande (6 ; 13) qui fait également fonctionner le deuxième moteur de ventilateur (4 ; 12) en même temps que le premier moteur de ventilateur (2 ; 11), et le premier moteur de ventilateur (2 ; 11) étant piloté par l'intermédiaire de l'unité de commande (13) avec une régulation de régime et le régime du deuxième moteur de ventilateur (4 ; 12) s'établissant en fonction du régime du premier moteur de ventilateur (2 ; 11).
